# EUROPÄISCHE PATENTSCHRIFT

(11) **EP 2 252 817 B1**
(45) Veröffentlichungstag und Bekanntmachung des Hinweises auf die Patenterteilung: **05.09.2012**
(21) Anmeldenummer: 09720902.7
(22) Anmeldetag: 05.03.2009
(51) Int. Cl.: F16K 17/30, F16K 15/06, F16L 55/10

(54) **GASSTRÖMUNGSWÄCHTER**
GAS FLOW MONITOR
DISPOSITIF DE SURVEILLANCE DE L'ÉCOULEMENT D'UN GAZ

(30) Priorität: 11.03.2008 DE 102008013508
(43) Veröffentlichungstag der Anmeldung: 24.11.2010
(73) Patentinhaber: Mertik Maxitrol GmbH & Co. KG, 06502 Thale (DE)
(72) Erfinder: FISCHER, Norbert, 39120 Magdeburg (DE)
(74) Vertreter: Albrecht, Günter
(86) Internationale Anmeldenummer: PCT/EP2009/001565
(87) Internationale Veröffentlichungsnummer: WO 2009/112197

(56) Entgegenhaltungen:
- WO-A-92/01184
- DE-A1- 4 344 575
- DE-A1- 10 043 811
- DE-A1- 10 351 041
- US-A- 3 587 632

## Beschreibung

### Technisches Gebiet

Die Erfindung betrifft einen Gasströmungswächter zum automatischen Absperren von nachgeordneten Gasleitungen bei Überschreitung eines definierten maximalen Durchflusses nach dem Oberbegriff des ersten Patentanspruches.

### Stand der Technik

Gasströmungswächter dienen dazu, bei einer Erhöhung des Gasverbrauches über einen vorgegebenen Wert, wie es beispielsweise bei Rohrleitungsbrüchen oder unzulässig hohen Leckagen der Fall ist, die Gaszufuhr in die nachfolgende Gasleitung zu unterbrechen. Es gibt sie in einer Vielzahl von Ausführungen. Sie werden in Rohrleitungen, wie zum Beispiel vor Gasarmaturen, Gasgeräten usw., eingesetzt. Um den gewünschten Schließ- bzw. Nenndurchfluss einzustellen, wird eine Feder durch veränderbare Anschläge so vorgespannt, dass durch die resultierende Kraft aus der Vorspannkraft der Feder und der Strömungskraft des Gasstromes der Gasströmungswächter seine Geschlossen- bzw. seine Offenstellung einnimmt.

Aus der DE 43 44 575 A1 ist ein als Sicherheitsschließvorrichtung für Gasleitungen bezeichneter Gasströmungswächter bekannt. Diese Sicherheitsschließvorrichtung besteht aus einem Ventilkörper, der gegen einen Ventilsitz pressbar ist. Der Ventilkörper ist mit einem Zapfen versehen auf dem ein Sperrelement befestigbar ist, auf dem sich eine Schließfeder abstützt, die mit ihrem anderen Ende am Ventilkörper anliegt. Durch Veränderung der Lage des Sperrelementes auf dem Zapfen kann die Federvorspannung zur Justierung des Schließdurchflusses verändert werden.

In der WO 92/01184 A1 ist ein ebenfalls als Sicherheitsschließvorrichtung bezeichneter Gasströmungswächter beschrieben, der bei einer auftretenden Beschädigung des Rohrleitungssystems dieses verschließt, ohne jedoch ein vorzeitiges Verschließen der Zuleitung zu bewirken, wenn ein Verbraucher über einen längeren Zeitraum die seiner Leistung entsprechende Gasmenge benötigt. Bei dieser Sicherheitsschließvorrichtung ist ein Ventil als Tellerventil ausgebildet.

Dabei ist der Ventilkörper auf einem Ventilschaft befestigt, der beidseitig in Gleitlagern in axialer Richtung des Ventils entgegen der Kraft einer Feder verschiebbar gelagert ist. Der Ventilteller wirkt dabei mit einem, in einer von zwei Ringscheiben befindlichen Ventilsitz zusammen, wobei die Ringscheiben gleichzeitig als Lagerung für die weiter oben bereits genannten Gleitlager dienen. Die Ringscheiben sind mit Ausnehmungen bzw. Durchbrüchen versehen.

Um den Schließdurchfluss an die Art, Natur und Menge der Verbraucher exakt anpassen zu können ist die Federkraft der Feder und/oder der Schließweg des Ventils einstellbar. Für eine Verstellung des Schließweges des Ventils ist am freien Ende des Ventilschaftes eine Mutter vorgesehen, die auf einem auf dem Ventilschaft befindlichen Gewinde aufgeschraubt ist. Für die Einstellung der Federkraft dient eine im Bereich zwischen den beiden Gleitlagern angeordnete, beispielsweise von einer zweiten Mutter gebildete Verstelleinrichtung.

Ein weiterer Gasströmungswächter ist in der DE 100 43 811 B4 beschrieben. Er besteht aus einem gasdichten Gehäuse, das in eine vom Gas durchströmte Rohrleitung eingesetzt wird. Im Inneren des Gehäuses ist ein Ventilsitz für einen beweglichen Schließkörper ausgebildet. Der Schließkörper ist auf einem axial beweglichen Stift befestigt, der in einer Eingangsführung und einer Ausgangsführung gelagert wird. Durch eine Schließfeder, die sich einerseits an einem durch ein mittig in die Ausgangsführung eingeschraubtes Justierelement und andererseits an dem Schließkörper abstützt, wird dieser in Offenstellung gehalten. Zusätzlich ist auf der Eingangsführung ein Distanzstück angeordnet, das in Offenstellung des Gasströmungswächters einen ebenfalls justierbaren Anschlag für den Schließkörper bildet.

Eine andere Ausführung eines Strömungswächters ist aus der DE 201 16 899 U1 bekannt. Auch dieser Strömungswächter besteht aus einem im Inneren einen Ventilsitz aufweisenden Gehäuse und einem in dem Gehäuse angeordneten Schließkörper, der im Normalzustand durch eine Rückhaltekraft in seiner Offenstellung gehalten wird. An dem Schließkörper ist ein Führungsstift befestigt, der sich ausgehend von dem Schließkörper in der dem Ventilsitz gegenüberliegenden Richtung durch eine in einem Stützelement ausgebildete Öffnung erstreckt und dabei in dieser geführt wird. An seinem dem Schließkörper gegenüberliegendem Ende weist der Führungsstift Ringnuten auf. In einer der Ringnuten ist ein Einstellring verrastet. Zwischen dem Einstellring und dem Stützelement ist eine Feder angeordnet, die auf den Einstellring eine Druckkraft ausübt. Diese Druckkraft bildet eine Rückhaltekraft, die den Schließkörper in der Offenstellung hält. Durch Verrasten des Einstellringes in einer anderen Ringnut kann die von der Feder ausgeübte Druckkraft und damit die Rückhaltekraft verändert werden.

Bei allen diesen genannten Lösungen erfolgt die Einstellung eines definierten Wertebereiches des Schließ- bzw. Nenndurchflusses durch eine Veränderung der Vorspannung einer Feder, die den Schließ- / Ventilkörper in der Offenstellung hält. Hierbei ist es von Nachteil, dass gleichzeitig mit der Veränderung der Vorspannung der Feder eine Veränderung des Hubes des Schließ- / Ventilkörpers und damit einhergehend eine Verkleinerung oder Vergrößerung des Strömungsspaltes erfolgt. Damit verbunden ist eine Verringerung bzw. Erhöhung der auf den Schließ- / Ventilkörper wirkenden Kraft infolge des Strömungsdruckes bzw. der Druckdifferenz. Diese gleichzeitige Verringerung bzw. Erhöhung der gegeneinandergerichteten Kräfte führt zu einer teilweisen oder vollständigen Aufhebung der Veränderbarkeit des Schließdurchflusses. Eine Justierung wird so erschwert oder unmöglich. Ein weiterer Nachteil hierbei ist die auftretende Änderung des Druckverlustes über den Gasströmungswächter. Das ist besonders problematisch, wenn Grenzwerte bei der Durchflusseinstellung nicht überschritten werden dürfen. Darstellung der Erfindung

Der vorliegenden Erfindung liegt das Problem zugrunde, einen Gasströmungswächter der genannten Art zu entwickeln, bei dem die Einstellung eines definierten Wertebereiches des Schließ- bzw. Nenndurchflusses durch Veränderung der Vorspannung der Feder ohne eine Veränderung des Hubes des Schließ- / Ventilkörpers und damit einhergehend eine Verkleinerung oder Vergrößerung des Strömungsspaltes erfolgt.

Erfindungsgemäß wird das Problem dadurch gelöst, dass sich ein Stift, an dessen eingangsseitigem Ende ein Schließkörper befestigt ist, unter der Kraft einer Schließfeder mit einem an seinem ausgangsseitigen Ende befindlichen Anschlag über ein rohrförmiges Distanzstück auf einer ausgangsseitig im Gehäuse angeordneten Führung abstützt. Die Führung weist mittig eine in axialer Richtung einstellbare Hülse auf, in welcher der Stift längsbeweglich geführt ist. Das Distanzstück und die Hülse sind fest miteinander verbunden.

Damit wurde eine Lösung gefunden, mit der der weiter oben genannte Nachteil des Standes der Technik beseitigt wurde. Die erfindungsgemäße Lösung gewährleistet einen gleichen Strömungsspalt zwischen dem Gehäuse und dem Schließkörper in der Offenstellung und damit fixierte Druckverluste. Die Justierung wird nur noch von einem Parameter, der Kraft der Schließfeder, beeinflusst. Damit ist eine feinere Einstellung des gewünschten Schließ- bzw. Nenndurchflusses in beiden Richtungen möglich.

Weitere vorteilhafte Ausgestaltungen der Erfindung gehen aus den abhängigen Patentansprüchen hervor. So ist es in einfacher Weise möglich, zusätzlich eine Dämpfungsfunktion in das Schließverhalten des Gasströmungswächters zu integrieren. Das ist immer dann wünschenswert, wenn es im dem Gasströmungswächter nachgeschalteten Leitungssystem zu kurzzeitigen Strömungsspitzen kommen kann, die so weit über dem normalen Verbrauchswert liegen, dass der eingestellte Schließdurchfluss überschritten wird. Als Beispiel seien hier nur Gasgeräte genannt, die durch ein schlagartig öffnendes Magnetventil geschaltet werden. Durch diese Dämpfungsfunktion tritt auch bei einem eingestellten Schließdurchfluss nahe dem Normalverbrauch, wie es aus Sicherheitsgründen wünschenswert ist, kein ungewolltes Schließen des Gasströmungswächters auf.

Dazu weist das Distanzstück eine zylindrische Erweiterung auf, die stirnseitig durch eine Kappe verschlossen ist. In diesen durch die Erweiterung und die Kappe gebildeten Raum ragt der Stift hinein, wobei der Anschlag des Stiftes an der Innenwandung längsbeweglich geführt ist. Dadurch wird eine Teilung dieses Raumes erreicht und der bei einer Bewegung des Schließkörpers notwendige Volumenausgleich über die durch Anschlag und Innenwandung gebildete Drosselstelle führt während des Auftretens einer Strömungsspitze nicht zum schlagartigen Schließen des Gasströmungswächters. Nach dem Abklingen der Strömungsspitze wird der Schließkörper durch die Schließfeder wieder in seine Offenstellung gebracht.

Desweiteren erweist sich eine Ausführung als fertigungstechnisch vorteilhaft, bei der das Gehäuse und die Führung einstückig ausgeführt sind. Bei einer weiteren ebenfalls fertigungstechnisch vorteilhaften Ausgestaltung ist die Hülse einerseits mit der Führung verschraubt und andererseits mit dem Distanzstück verpresst oder umgekehrt. Auch ist es möglich, dass der Stift und der Anschlag einstückig gestaltet werden, indem der Anschlag durch einen Bund gebildet wird.

### Ausführungsbeispiel

Der erfindungsgemäße Gasströmungswächter wird nachstehend an Ausführungsbeispielen näher beschrieben. Es zeigen:
- Fig. 1: einen erfindungsgemäßen Gasströmungswächter im Schnitt in Offenstellung
- Fig. 2: eine Ansicht A des erfindungsgemäßen Gasströmungswächters aus Figur 1.
- Fig. 3: einen erfindungsgemäßen Gasströmungswächter mit Dämpfungsfunktion im Schnitt in Geschlossenstellung

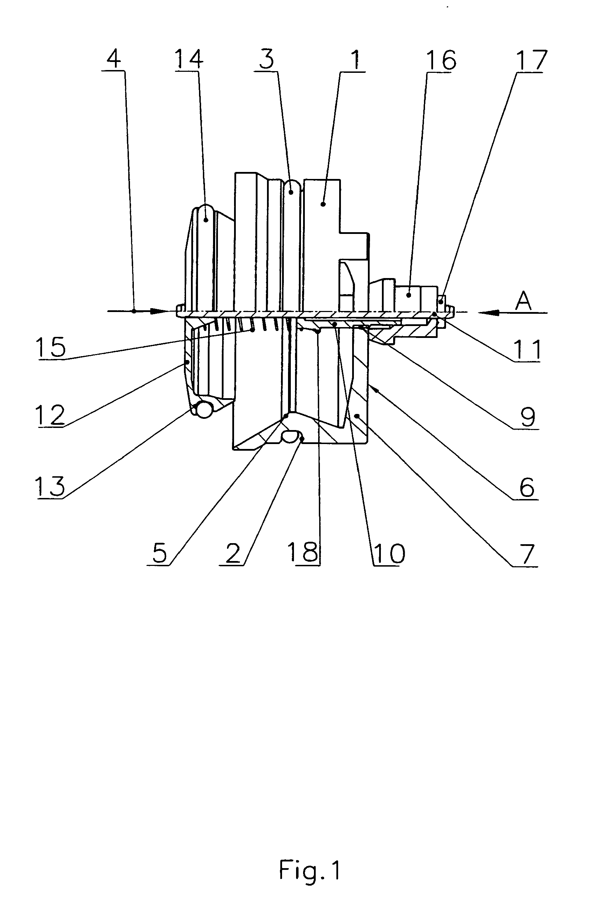

In der Figur 1 ist ein erstes Ausführungsbeispiel eines erfindungsgemäßen Gasströmungswächters dargestellt. Er besitzt ein rohrförmiges Gehäuse 1, das in eine nicht dargestellte Gasleitung eingedrückt werden kann. Um die notwendige Dichtheit zwischen der Gasleitung und dem Gehäuse 1 zu garantieren, weist das Gehäuse 1 eine umlaufende Nut 2 auf, in der sich ein O-Ring 3 befindet. Es versteht sich von selbst, dass auch ein anderer Anschluss möglich ist.

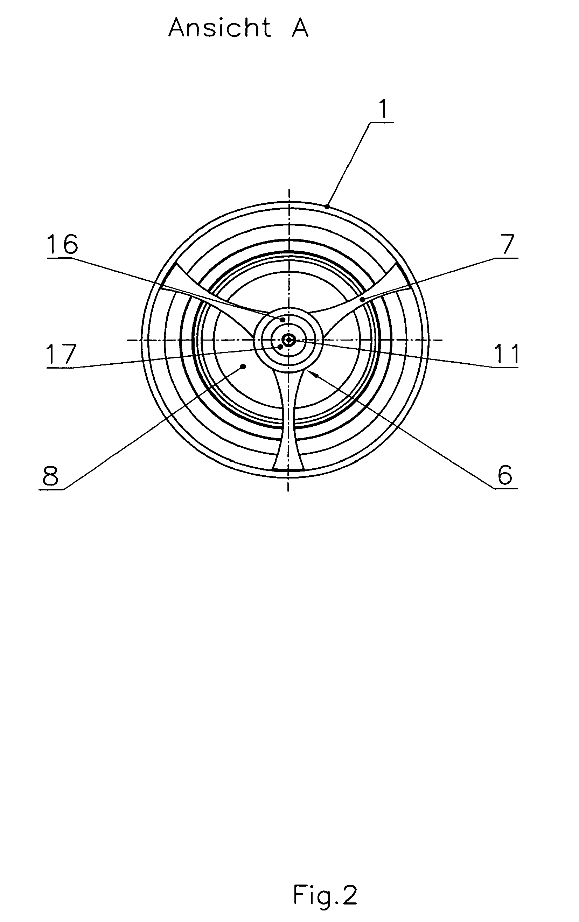

In der durch einen Richtungspfeil 4 gezeigten Richtung kann Gas durch das Gehäuse 1 hindurchströmen. In etwa mittig besitzt das Gehäuse 1 eine Einschnürung, die auf ihrer dem Gaseingang zugewandten Seite als Ventilsitz 5 ausgebildet ist. Am ausgangsseitigen Ende des Gehäuses 1 befindet sich eine Führung 6, die durch mehrere radiale Stege 7 gebildete Durchströmöffnungen 8 für den Gasstrom aufweist. Über die Stege 7 ist die Führung 6, in diesem Ausführungsbeispiel einstückig, mit dem Gehäuse 1 verbunden (Fig. 2).

Die Führung 6 weist in axialer Richtung mittig eine Durchgangsbohrung 9 auf, in der eine Hülse 10 in axialer Richtung einstellbar gelagert ist. Um diese Einstellung möglichst präzise und einfach durchführen zu können, erweist sich als vorteilhaft, wenn die Durchgangsbohrung 9 mit einem Gewinde versehen ist, in welches die Hülse 10 eingeschraubt wird.

In der Hülse 10 wird ein Stift 11 längsbeweglich geführt. Auf seinem eingangsseitigen Ende ist ein Schließkörper 12 beispielsweise mittels Presspassung befestigt. Zum Erzielen der gewünschten Dichtheit bei der Geschlossenstellung des Gasströmungswächters besitzt der Schließkörper 12 eine ringförmige Nut 13 für einen als elastisches Abdichtelement dienenden O-Ring 14. Auf einem Bund 18 der Hülse 10 stützt sich eine Schließfeder 15 ab, die mit ihrem anderen Ende den Schließkörper 12 in seiner Offenstellung hält.

Auf der ausgangsseitigen Seite der Führung 6 stützt sich ein rohrförmiges Distanzstück 16 ab, das vorteilhafterweise mittels eines Klemmsitzes fest mit der Hülse 10 verbunden ist.

Der das Distanzstück 16 durchdringende Stift 11 ist auf seinem ausgangsseitig aus dem Distanzstück 16 herausragenden Ende mit einem aufgepressten Anschlag 17 versehen. Es versteht sich, dass dieser Anschlag 17 auch als einstückig am Stift 11 befindlicher Bund ausgeführt sein kann. Durch den Anschlag 17 wird der maximale Hub des Schließkörpers 12 festgelegt.

Bei der Montage werden die Teile Schließkörper 12, Stift 11 und Schließfeder 15 vormontiert und der Stift 11 dann durch die Hülse 10 hindurch gesteckt, die annähernd bis zum Bund 18 in die Führung 6 eingeschraubt ist. Das Distanzstück 16 wird über den Stift 11 gesteckt und so weit auf die Hülse 10 aufgepresst, dass es an der Führung 6 anliegt. Über den Anschlag 17 wird dann der maximale Öffnungshub des Schließkörpers 12 eingestellt.

Die Justierung des Schließ- bzw. Nenndurchflusses über die Vorspannkraft der Schließfeder 15 ist nunmehr in einfacher Weise dadurch möglich, dass das Distanzstück 16 so gedreht wird, dass sich die Hülse 10 auf Grund der Gewindeverbindung mit der Führung 6 in ihrer Längsrichtung aus dem Distanzstück 16 herausschraubt, bis der gewünschte Wert des Schließ- bzw. Nenndurchflusses, d.h. die entsprechende Vorspannkraft der Schließfeder 15 erreicht ist. Je feiner dabei die Steigung des Gewindes gewählt wird, desto genauer lässt sich auch die Vorspannkraft einstellen. Dabei bleibt der maximale Öffnungshub konstant.

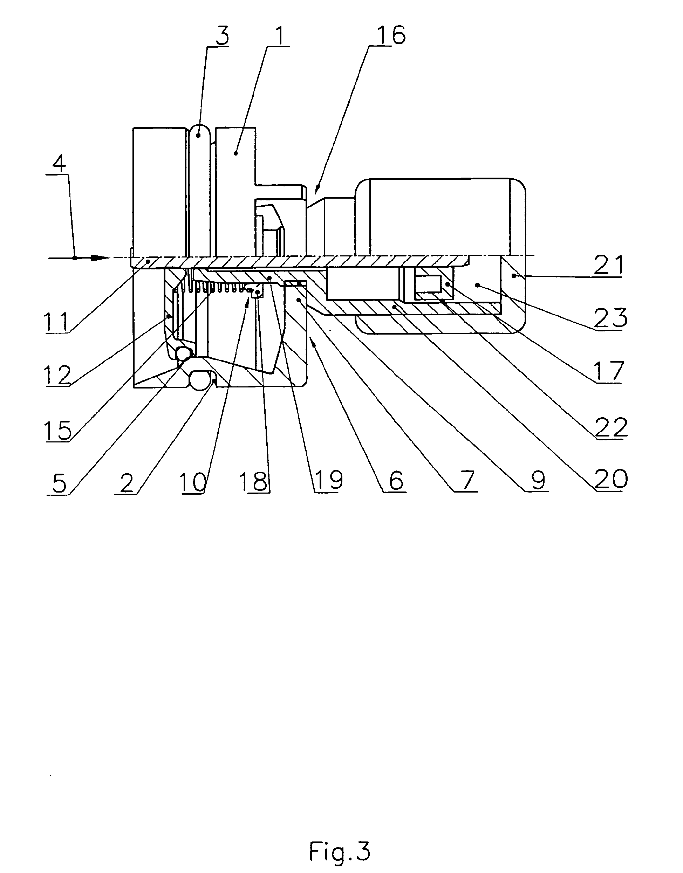

Als ein weiteres Ausführungsbeispiel ist zusätzlich in der Figur 3 eine veränderte Ausführung des erfindungsgemäßen Gasströmungswächters in der Geschlossenstellung gezeigt. Dieser Gasströmungswächter ist mit einer Dämpfungsfunktion versehen, die ihn gegenüber Schwingungen unempfindlicher macht. Die entsprechende Notwendigkeit wurde bereits weiter oben gewürdigt.

Neben dem ansonsten grundsätzlich gleichen Aufbau wie der in Figur 1 in Offenstellung dargestellte Gasströmungswächter, wird in diesem Ausführungsbeispiel das Distanzstück 16, vorzugsweise wieder mittels Gewinde, in der Durchgangsbohrung 9 der Führung 6 in axialer Richtung einstellbar gelagert. Dazu ragt ein zapfenförmiger Fortsatz 19 in Richtung Schließkörper 12. Auf diesem Fortsatz 19 ist die Hülse 10 aufgepresst auf deren Bund 18 sich wieder die Schließfeder 15 abstützt, die mit ihrem anderen Ende den Schließkörper 12 in seiner Offenstellung hält.

Auf seiner dem Gehäuse 1 abgewandten Seite besitzt das Distanzstück 16 eine zylindrische Erweiterung 20, die stirnseitig durch eine Kappe 21 verschlossen ist. Der in den durch Erweiterung 20 und Kappe 21 gebildeten Raum 23 hineinragende Stift 11, wird über den Anschlag 17 des Stiftes 11 an der Innenwandung längsbeweglich geführt. Dabei bilden Anschlag 17 und Innenwandung einen Ringspalt 22, der bei einer Bewegung des Schließkörpers 12 eine Drosselstelle für den notwendigen Volumenausgleich bildet. Dadurch führt ein kurzfristiges Auftreten einer Strömungsspitze, deren Wert über dem Schließdurchfluss liegt nicht zum schlagartigen Schließen des Gasströmungswächters, sondern nur zum Beginn einer verzögerten Schließbewegung. Nach dem Abklingen der Strömungsspitze wird der Schließkörper 12 durch die Schließfeder 15 wieder in seine Offenstellung gebracht. Wird jedoch der Schließdurchfluss über einen längeren Zeitraum überschritten, wie es bei einem Leck der Fall ist, so nimmt der Gasströmungswächter die Geschlossenstellung ein, wie sie in der Figur 3 dargestellt ist.

Die Montage des in diesem zweiten Ausführungsbeispiels beschriebenen Gasströmungswächters erfolgt derart, dass zuerst das Distanzstück 16 mit seinem zapfenförmigen Fortsatz 19 in die Führung 6 eingeschraubt wird. Anschließend wird die Hülse 10 auf den Fortsatz 19 so weit aufgepresst, dass sie an der Führung 6 annähernd anliegt. Die Teile Schließkörper 12, Stift 11 und Schließfeder 15 werden vormontiert und der Stift 11 dann durch den zapfenförmigen Fortsatz 19 hindurch gesteckt, bis sein Ende in die zylindrische Erweiterung 20 hineinragt. Über den Anschlag 17 wird dann der maximale Öffnungshub des Schließkörpers 12 eingestellt. Ehe zum Abschluss die Kappe 21 auf das Distanzstück 16 aufgesteckt wird, erfolgt günstigerweise erst die Justierung des Gasströmungswächters, um einen höheren Zeitaufwand durch die vorhandene Dämpfungsfunktion zu vermeiden.

Die Justierung des Schließ- bzw. Nenndurchflusses über die Vorspannkraft der Schließfeder 15 ist auch bei diesem Ausführungsbeispiel in annähernd so einfacher Weise wie beim ersten Ausführungsbeispiel möglich. In einem ersten Schritt wird das Distanzstück 16 ein Stück aus der Führung 6 heraus gedreht. Dabei wird die an der Führung 6 anliegende Hülse 10 auf dem zapfenförmigen Fortsatz 19 verschoben. Anschließend wird das Distanzstück 16 wieder bis zum Anschlag in die Führung 6 eingeschraubt. Dabei bleibt die Lage der Hülse 10 auf dem Fortsatz 19 auf Grund der zwischen beiden Bauteilen bestehenden Presspassung unverändert, wohingegen sich der Abstand zwischen dem Schließkörper 12 und der Hülse 10, und damit die Vorspannung der Schließfeder 15 verändert.

Anschließend wird der Wert des Schließ- bzw. Nenndurchflusses überprüft und im Bedarfsfall eine Nachjustierung durch Wiederholung der genannten Schritte durchgeführt.

### Aufstellung der Bezugszeichen

- 1: Gehäuse
- 2: Nut
- 3: O - Ring
- 4: Richtungspfeil
- 5: Ventilsitz
- 6: Führung
- 7: Steg
- 8: Durchströmöffnung
- 9: Durchgangsbohrung
- 10: Hülse
- 11: Stift
- 12: Schließkörper
- 13: Nut
- 14: O - Ring
- 15: Schließfeder
- 16: Distanzstück
- 17: Anschlag
- 18: Bund
- 19: Fortsatz
- 20: Erweiterung
- 21: Kappe
- 22: Ringspalt
- 23: Raum

## Patentansprüche

1. Gasströmungswächter zum automatischen Absperren von nachgeordneten Gasleitungen bei Überschreitung eines definierten maximalen Durchflusses mit einem gasdichten Gehäuse (1), das im Inneren einen Ventilsitz (5) für einen axial beweglichen Schließkörper (12) aufweist, mit einem den Schließkörper (12) führenden Stift (11), mit einer in Strömungsrichtung ausgangsseitig im Gehäuse (1) angeordneten Führung (6), die durch mehrere radiale Stege (7) gebildete Durchströmöffnungen (8) für den Gasstrom aufweist, mit einer mittig angeordneten in axialer Richtung einstellbaren Hülse (10), in welcher der Stift (11) längsbeweglich geführt ist, und mit einer Schließfeder (15), die sich einerseits auf der Hülse (10) und andererseits an dem Schließkörper (12) abstützt, der durch die Federkraft gegen die Durchströmrichtung in Offenstellung gehalten ist, dadurch gekenntzeichnet, dass sich der Stift (11) mit einem an seinem ausgangsseitigen Ende befindlichen Anschlag (17) über ein rohrförmiges Distanzstück (16) auf der Führung (6) abstützt, und das Distanzstück (16) mit der Hülse (10) fest verbunden ist.

2. Gasströmungswächter nach Patentanspruch 1, **dadurch gekennzeichnet, dass** das Distanzstück (16) eine zylindrische Erweiterung (20) aufweist, die stirnseitig durch eine Kappe (21) verschlossen ist, und dass der Stift (11) in den durch Erweiterung (20) und Kappe (21) umschlossenen Raum (23) hineinragt, wobei der Anschlag (17) des Stiftes (11) an der Innenwandung längsbeweglich geführt ist.

3. Gasströmungswächter nach Patentanspruch 1 oder 2, **dadurch gekennzeichnet, dass** das Gehäuse (1) und die Führung (6) einstückig ausgeführt sind.

4. Gasströmungswächter nach Patentanspruch 1 oder 2 oder 3, **dadurch gekennzeichnet, dass** die Hülse (10) einerseits mit der Führung (6) verschraubt und andererseits mit dem Distanzstück (16) verpresst ist.

5. Gasströmungswächter nach Patentanspruch 1 oder 2 oder 3, **dadurch gekennzeichnet, dass** die Hülse (10) einerseits mit der Führung (6) verpresst und andererseits mit dem Distanzstück (16) verschraubt ist.

6. Gasströmungswächter nach einem der Patentansprüche 1 bis 5, **dadurch gekennzeichnet, dass** der Anschlag (17) durch einen Bund gebildet wird.

## Claims

1. Gas flow monitor for automatically shutting off downstream conduits when a defined maximum flow is exceeded with a gas-tight housing (1) which has in its interior a valve seat (5) for an axially movable closing body (12), with a pin (11) guiding the closing body (12), with a guide (6) arranged in the housing (1) on the outlet side in the direction of flow, said guide having through flow openings (8) for the gas flow formed by several radial webs (7), with a centrally positioned sleeve (10) which is adjustable in an axial direction and in which the pin (11) is guided in a longitudinally movable manner, and with a closing spring (15) which is supported on one side on the sleeve (10) and on the other side on the closing body (12) which is held in the open position by the spring force against the flow direction, **characterized in that** the pin (11) is supported on the guide (6) with a stop (17) disposed at its outlet side end by way of a tubular spacer (16), and the spacer (16) and the sleeve (10) are firmly connected to each other.

2. Gas flow monitor according to claim 1, **characterized in that** the spacer (16) comprises a cylindrical extension (20) that is sealed on its front side by a cap, and that the pin (11) projects into the space (23) enclosed by extension (20) and cap (21), with the stop (17) of the pin (11) being guided in a longitudinally movable manner on the inner wall.

3. Gas flow monitor according to claim 1 or 2, **characterized in that** the housing (1) and the guide (6) are embodied as a single piece.

4. Gas flow monitor according to claim 1 or 2 or 3, **characterized in that** the sleeve (10) is screwed to the guide (6) on one side and pressed onto the spacer (16) on the other side.

5. Gas flow monitor according to claim 1 or 2 or 3, **characterized in that** the sleeve (10) is pressed to the guide (6) on one side and screwed to the spacer (16) on the other side.

6. Gas flow monitor according to one of the claims 1 to 5, **characterized in that** the stop (17) is formed by a flange.

## Revendications

1. Dispositif de surveillance de l'écoulement d'un gaz pour la fermeture automatique de conduites de gaz montées en aval en cas de dépassement d'un débit maximal défini, ayant un boîtier (1) étanche au gaz qui comprend à l'intérieur un siège de soupape (5) pour un corps de fermeture (12) mobile axialement, et ayant une tige (11) guidant le corps de fermeture (12), et ayant un guidage (6) disposé, coté sortie, dans le boîtier (1), dans le sens de l'écoulement, qui comprend des ouvertures de passage (8) pour l'écoulement du gaz qui sont formées par plusieurs nervures radiales (7), et ayant une douille (10) disposée au centre et réglable dans la direction axiale, dans laquelle la tige (11) est guidée en déplacement longitudinal, et ayant un ressort de fermeture (15) qui s'appuie d'un côté sur la douille (10) et d'autre côté contre le corps de fermeture (12) qui est maintenu dans une position d'ouverture contre le sens de l'écoulement par la force du ressort, **caractérisé en ce que** la tige (11) s'appuie sur le guidage (6) par une butée (17) se trouvant sur l'extrémité côté sortie de la tige (11), via une entretoise (16) tubulaire, et que l'entretoise (16) est reliée de manière fixe à la douille (10).

2. Dispositif de surveillance de l'écoulement d'un gaz selon la revendication 1, **caractérisé en ce que** l'entretoise (16) comprend un élargissement (20) cylindrique qui est fermé, côté frontal, par un capot (21), et que la tige (11) s'étend dans l'espace (23) enfermé par l'élargissement (20) et le capot (21), la butée (17) de la tige (11) étant guidée en déplacement longitudinal le long de la paroi interne.

3. Dispositif de surveillance de l'écoulement d'un gaz selon la revendication 1 ou 2, **caractérisé en ce que** le boîtier (1) et le guidage (6) sont réalisés en une seule pièce.

4. Dispositif de surveillance de l'écoulement d'un gaz selon la revendication 1 ou 2 ou 3, **caractérisé en ce que** la douille (10) est d'un côté vissée avec le guidage (6) et d'autre côté comprimée avec l'entretoise (16).

5. Dispositif de surveillance de l'écoulement d'un gaz selon la revendication 1 ou 2 ou 3, **caractérisé en ce que** la douille (10) est d'un côté comprimée avec le guidage (6) et d'autre côté vissée avec l'entretoise (16).

6. Dispositif de surveillance de l'écoulement d'un gaz selon l'une des revendications 1 à 5, **caractérisé en ce que** la butée (17) est formée par une collerette.
